# EUROPEAN PATENT APPLICATION

(11) **EP 3 188 288 A1**
(43) Date of publication of application: **05.07.2017**
(21) Application number: 15829345.6
(22) Date of filing: 30.06.2015
(51) Int. Cl.: H01M 4/14, H01M 4/57, H01M 4/73

(54) **POSITIVE ELECTRODE PLATE FOR LEAD STORAGE BATTERY, AND LEAD STORAGE BATTERY USING SAME**

(30) Priority: 08.08.2014 JP 2014162998
(71) Applicant: Hitachi Chemical Company, Ltd., Chiyoda-ku Tokyo 100-6606 (JP)
(72) Inventor: MUKAITANI Ichiroh, Tokyo 100-6606 (JP); SAKAMOTO Takeo, Tokyo 100-6606 (JP)
(74) Representative: Addiss, John William
(86) International application number: PCT/JP2015/068769
(87) International publication number: WO 2016/021334

(57) **Abstract**

A lead-acid battery with enhanced initial capacity is provided without reducing the battery life. A lead-acid battery positive electrode is formed by filling a positive electrode active material paste into a grid substrate made of a lead alloy. The positive electrode active material paste is obtained by kneading a raw material including lead powder containing lead metal containing lead monoxide as a main component. The lead powder is adjusted such that it has a median size adjusted to 0.5 µm to 10 µm. The lead metal is adjusted such that it has an average value (average particle diameter T10 of the lead metal) of 10 µm to 35 µm for the particle diameters of top ten lead metal particles with the largest particle diameter as the lead metal is observed using a metallurgical microscope.

## Description

### TECHNICAL FIELD

The present invention relates to a lead-acid battery positive electrode formed by filling a paste-like active material into a grid substrate made of a lead alloy, and to a lead-acid battery including the positive electrode.

### BACKGROUND ART

JP 4293130 (Japanese Patent; Patent Document 1) discloses a lead-acid battery positive electrode formed by filling a positive electrode active material paste into a positive grid member made of a lead alloy, and the positive electrode active material paste is obtained by kneading a raw material of a positive electrode active material, which contains lead powder and red lead as main components, with dilute sulfuric acid. In the lead-acid battery positive electrode, the porosity of a positive electrode active material after being chemically converted is adjusted to 58% or more.

### Related-Art Document

### Patent Document

Patent Document 1: JP 4293130

### SUMMARY OF INVENTION

### TECHNICAL PROBLEM

In a lead-acid battery according to the related art that includes the positive electrode as disclosed in Patent Document 1, the battery life can be extended to a certain degree, but the initial capacity is reduced instead. As the general characteristics of lead-acid batteries, the battery life tends to be reduced if it is attempted to enhance the initial capacity, and the initial capacity tends to be reduced if it is attempted to improve the battery life. Therefore, it has been difficult to improve both the initial capacity and the battery life at the same time in the lead-acid battery according to the related art.

An object of the present invention is to provide a lead-acid battery with improved initial capacity and the battery life of the lead-acid battery.

### SOLUTION TO PROBLEM

A lead-acid battery positive electrode, which the present invention aims at improving, is formed by filling a positive electrode active material paste into a grid substrate made of a lead alloy, the positive electrode active material paste being obtained by kneading a raw material including lead powder containing lead metal containing lead monoxide as a main component. The "lead powder containing lead metal containing lead monoxide as a main component" recited herein is obtained by crushing lead metal as a raw material of the lead powder. The lead powder thus obtained contains lead monoxide in which most of the lead metal has been oxidized during the crushing process, and the remaining lead metal which has been left unoxidized.

The raw materials of the positive electrode active material paste may include lead dioxide, lead sulfate, and water, besides the lead powder. In this case, the molar ratio of the lead dioxide and the lead sulfate to be kneaded with each other may be adjusted to be 1:2. The use of the lead dioxide and the lead sulfate which are adjusted to such molar ratio theoretically makes it possible to fabricate a positive electrode active material paste that is similar to that fabricated when red lead and dilute sulfuric acid are used as raw materials.

In the present invention, the lead powder which constitutes the raw material of the positive electrode active material paste has a median size adjusted to 0.5 µm to 10 µm. The term "median size" means the median value of the grain size distribution of the lead powder as measured by a grain size distribution measuring device. When the median size is in the range of less than 0.5 µm, the initial capacity is enhanced, but the battery life tends to be shortened. When the median size is in the range of more than 10 µm, the battery life is extended, but the initial capacity tends to be reduced.

In the present invention, the lead metal is adjusted such that the lead metal has an average particle diameter T10 of 10 µm to 35 µm when an average value of the particle diameters of top ten lead metal particles with the largest particle diameter is defined as the "average particle diameter T10 of the lead metal" as the lead metal included in the raw material of the positive electrode active material paste is observed using a metallurgical microscope. When the average particle diameter T10 of the lead metal is less than 10 µm, the battery life is reduced. When the average particle diameter T10 of the lead metal is more than 35 µm, either of the initial capacity and the battery life cannot be improved.

As described above, it is possible to provide a lead-acid battery with a high initial capacity without reducing the battery life by using a positive electrode formed using a positive electrode active material paste including, as a raw material, lead powder which has a median size adjusted in the range of 0.5 µm to 10 µm and contains lead metal having the average particle diameter T10 adjusted to 10 µm to 35 µm.

Preferably, the average particle diameter T10 of the lead metal is adjusted to 15 µm to 35 µm. It is possible to improve both the initial capacity and the battery life of the lead-acid battery by using a lead-acid battery positive electrode formed using a positive electrode active material paste including, as a raw material, lead powder containing lead metal, having the average particle diameter T10 adjusted in the range of 15 µm to 35 µm.

When the median size of the lead powder is adjusted to 0.5 µm to 10 µm and the average particle diameter T10 of the lead metal is adjusted to 10 µm to 35 µm as in the present invention, a specific surface area of the lead powder is adjusted to 1.5 m²/g to 3.0 m²/g. That is, in order to provide a lead-acid battery positive electrode with enhanced initial capacity while maintaining the battery life of the lead-acid battery, it is preferable to fabricate a lead-acid battery positive electrode using lead powder, the specific surface area of which has been adjusted in the range of 1.5 m²/g to 3.0 m²/g.

When the median size of the lead powder is adjusted to 0.5 µm to 10 µm and the average particle diameter T10 of the lead metal is adjusted to 15 µm to 35 µm, the specific surface area of the lead powder is adjusted to 1.5 m²/g to 2.0 m²/g. Thus, in order to improve both the initial capacity and the battery life of the lead-acid battery, it is preferable to fabricate a lead-acid battery positive electrode using lead powder, the specific surface area of which has been adjusted in the range of 1.5 m²/g to 2.0 m²/g.

Powder obtained by crushing lead using a ball mill is used as the lead powder as a raw material of the positive electrode active material paste. Specifically, the powder is fabricated by crushing the lead, which constitutes the raw material of the lead powder (a lead block containing lead metal as a main component), in a drum of the ball mill while feeding air into the drum of the ball mill using a blower fan, and collecting the powder using an exhaust fan. The median size of the lead powder and the average particle diameter T10 of the lead metal can be easily adjusted through the processes in which the ball mill, the blower fan, and the exhaust fan are used in combination in this way.

### DESCRIPTION OF EMBODIMENTS

A lead-acid battery positive electrode and a lead-acid battery according to an embodiment of the present invention will be described in detail below.

### [Adjustment of Lead Powder]

First, lead powder as a raw material of a positive electrode active material paste was prepared and adjusted. To adjust the lead powder, lead (a lead block containing lead metal as a main component) as the raw material of the lead powder was crushed into powder using a ball mill. While crushing the lead block, air was fed into a drum of the ball mill, of which the internal pressure had become negative (about -1.5 kPa to -0.25 kPa) due to oxygen consumption, by a flower fan at a prescribed air feeding pressure. The lead powder (lead powder containing lead metal containing lead monoxide as a main component) generated in the drum of the ball mill was suctioned and collected by an exhaust fan at a prescribed air exhaust pressure (about 4.5 kPa to 8.0 kPa). The drum of the ball mill was configured to rotate at a prescribed rotational speed during the crushing process, and to be externally cooled according to a rise in temperature inside the drum during the crushing process so that the inside of the drum could be kept within a prescribed temperature range. The median size and the specific surface area of the collected powder were measured and the average particle diameter T10 of the lead metal was verified so that only lots that met prescribed conditions were adopted.

### <Measurement of Median Size>

The median size (µm) of the lead powder, which had been collected using the exhaust fan while crushing the lead using the ball mill, was measured using a grain size distribution measuring device (IMT-3000 manufactured by Nikkiso Co., Ltd.) of a laser diffraction-scattering type (microtrack method). In the embodiment, lead powder was used from those lots in which a measured median size fell in the numerical range of 0.5 µm to 10 µm (under which condition the lead-acid battery achieved both the initial capacity and the battery life at the same time).

### <Measurement of Specific Surface Area>

The specific surface area (m²/g) of the obtained lead powder was measured using a high-speed specific surface area measuring device (NOVA 4200e) manufactured by Quantachrome Corporation. In the embodiment, lead powder was used from those lots in which a specific surface area fell in the numerical range of 1.5 m²/g to 3.0 m²/g (under which condition the lead-acid battery achieved both the initial capacity and the battery life at the same time).

### <Verification of Average Particle Diameter T10 of Lead Metal>

The average value of the particle diameters of top ten lead metal particles with the largest particle diameter was verified as the average particle diameter T10 (µm) of the lead metal as the lead metal in the raw material including the lead powder was observed using a microscope (MX-1200II) manufactured by Kabushiki Kaisha Nakaden. In the embodiment, the raw material was adjusted under a condition that the verified average particle diameter T10 of the lead metal was in the numerical range of 10 µm to 35 µm.

### [Fabrication of Positive Electrode]

A positive electrode active material paste was fabricated as follows. 85% by mass of lead powder with an adjusted particle diameter etc. and 15% by mass of red lead were mixed to obtain 100% by mass of a mixture of the lead powder and the red lead. 15.6% by mass of dilute sulfuric acid with a sulfuric acid density of 32% by mass and 10% by mass of water were added to the mixture and kneaded. Alternatively, a positive electrode active material paste may be fabricated as follows. In place of red lead and dilute sulfuric acid, 5.2% by mass of lead dioxide, 13.3% by mass of lead sulfate, and 11% by mass of water were added to 100% by mass of lead powder with an adjusted particle diameter etc. and the resulting mixture was kneaded. In this case, the compounding amounts of the lead dioxide and the lead sulfate were adjusted such that the molar ratio of the lead dioxide and the lead sulfate was 1:2. The active material paste thus prepared was filled into a grid member made of a lead alloy (lead-calcium-tin alloy), and the grid member was subjected to a prescribed process of aging and drying to fabricate a paste-type positive electrode that had not been chemically converted.

### [Fabrication of Lead-acid Battery]

A 12 V-35 Ah electrode group was fabricated by stacking the above-fabricated paste-type positive electrode and a prescribed paste-type negative electrode prepared separately via a retainer formed from a glass fiber non-woven fabric. The electrode group was inserted into a battery case made of ABS, and thereafter an electrolyte was poured into the battery case. The battery case was chemically converted for 90 hours at an electric charge amount of 250% of the theoretical capacity of the positive electrode active material to fabricate a lead-acid battery with a capacity of 35 Ah.

### EXAMPLES

The performance of the lead-acid battery according to the embodiment was verified with the examples described below. Table 1 indicates the conditions for adjusting the lead powder and the conditions for kneading the raw materials including the lead powder in respect of Examples 1 to 9 and Comparative Examples 1 to 8. To crush the lead powder, a ball mill and an ultrafine grinder were used in Comparative Example 1, but only a ball mill was used in the other examples and comparative examples. While a rotary batch-type ball mill was adopted in Comparative Example 1, a continuous-type ball mill was adopted in the other examples and comparative examples. Further, in Comparative Example 8, the lead powder was sintered at a high temperature.

**[Table 1]**

| | Median size of lead powder (µm) | Average particle diameter T10 of lead metal (µm) | Adjustment of lead powder as raw material | |
|---|---|---|---|---|
| | | | Air exhaust pressure (kPa) | Air feed pressure (kPa) |
| Comp. Ex. 1 | 0.3 | 20 | -0.9 | 4.5 |
| Comp. Ex. 2 | 0.5 | 5 | -0.25 | 4.5 |
| Ex. 1 | 0.5 | 10 | -0.5 | 4.5 |
| Ex. 2 | 0.5 | 20 | -0.9 | 4.5 |
| Ex. 3 | 0.5 | 30 | -0.9 | 4.5 |
| Comp. Ex. 3 | 0.5 | 40 | -1.5 | 4.5 |
| Comp. Ex. 4 | 5.0 | 5 | -0.9 | 4.5 |
| Ex. 4 | 5.0 | 10 | -0.9 | 4.5 |
| Ex. 5 | 5.0 | 20 | -0.9 | 4.5 |
| Ex. 6 | 5.0 | 30 | -0.9 | 4.5 |
| Comp. Ex. 5 | 5.0 | 40 | -0.9 | 4.5 |
| Comp. Ex. 6 | 10.0 | 5 | -1.5 | 5.5 |
| Ex. 7 | 10.0 | 10 | -1.5 | 6.0 |
| Ex. 8 | 10.0 | 20 | -1.5 | 6.5 |
| Ex. 9 | 10.0 | 30 | -1.5 | 7.0 |
| Comp. Ex. 7 | 10.0 | 40 | -1.5 | 8.0 |
| Comp. Ex. 8 | 15.0 | 20 | -1.5 | 6.5 |

Table 2 indicates the median size of the lead powder, the specific surface area of the lead powder, and the average particle diameter T10 of the lead metal, and the relative values of the initial capacity and the battery life of the corresponding lead-acid battery according to the examples and the comparative examples obtained under the conditions indicated in Table 1.

The initial capacity and the battery life were verified under the following conditions.

### <Verification of Initial Capacity>

For the initial capacity for the examples and the comparative examples, initial discharge was performed at 3C5A current (105 A), and the discharge time until a final voltage of 7.8 V was reached was measured. The initial capacity was indicated as a relative value with the initial capacity for a discharge time of 11 minutes defined as 100%.

### <Verification of Life Characteristics>

The life characteristics were verified as the durability against high-rate discharge (high-rate life). Specifically, after the lead-acid battery was discharged under the same condition as the verification of the initial capacity, the lead-acid battery was charged for 72 hours at a trickle charge voltage of 13. 62 V, and a cycle test was conducted in an atmosphere at 25°C to count the number of cycles through which the capacity was reduced to 80% of the initial value. The life was indicated as a relative value with the life of a standard article defined as 100. The cycle test was conducted under a condition that the lead-acid battery was discharged at 130 A for 15 minutes and thereafter charged at 13.62 V for 22 hours. The cycle test was repeated. The life was determined as the number of cycles which is smaller, the number of cycles at the time that the discharge end voltage fell below a prescribed voltage of 11.4 V or the number of cycles at the time that the capacity was reduced to 80% of the initial capacity when verifying once in every 50 cycles and discharging the battery until a final end voltage of 10.2 V was reached.

**[Table 2]**

| | Median size of lead powder (µm) | Average particle diameter T10 of lead metal (µm) | Specific surface area (m²/g) | Initial capacity (%) | High-rate life (%) |
|---|---|---|---|---|---|
| Comp. Ex. 1 | 0.3 | 20 | 3.8 | 118 | 40 |
| Comp. Ex. 2 | 0.5 | 5 | 3.1 | 118 | 75 |
| Ex. 1 | 0.5 | 10 | 2.3 | 114 | 100 |
| Ex. 2 | 0.5 | 20 | 1.8 | 109 | 120 |
| Ex. 3 | 0.5 | 30 | 1.5 | 105 | 140 |
| Comp. Ex. 3 | 0.5 | 40 | 1.4 | 95 | 140 |
| Comp. Ex. 4 | 5.0 | 5 | 3.1 | 118 | 80 |
| Ex. 4 | 5.0 | 10 | 2.3 | 118 | 100 |
| Ex. 5 | 5.0 | 20 | 1.8 | 118 | 120 |
| Ex. 6 | 5.0 | 30 | 1.5 | 118 | 140 |
| Comp. Ex. 5 | 5.0 | 40 | 1.2 | 100 | 100 |
| Comp. Ex. 6 | 10.0 | 5 | 3.1 | 118 | 80 |
| Ex. 7 | 10.0 | 10 | 2.2 | 118 | 100 |
| Ex. 8 | 10.0 | 20 | 1.7 | 118 | 120 |
| Ex. 9 | 10.0 | 30 | 1.5 | 118 | 140 |
| Comp. Ex. 7 | 10.0 | 40 | 1.1 | 100 | 100 |
| Comp. Ex. 8 | 15.0 | 20 | 1.1 | 82 | 120 |

It was found, as indicated in Table 2, that when the median size of the lead powder was in the range of 0.5 µm to 10 µm and the average particle diameter T10 of the lead metal was in the range of 10 µm to 35 µm, the initial capacity was enhanced without reducing the battery life. It was also found that the specific surface area of the lead powder was 1.5 m²/g to 3.0 m²/g in this case. Further, it was found that the initial capacity was enhanced and the battery life was extended especially when the median size of the lead powder was in the range of 0.5 µm to 10 µm and the average particle diameter T10 of the lead metal was in the range of 15 µm to 35 µm. It was also found that the specific surface area of the lead powder was 1.5 m²/g to 2.0 m²/g in this case.

Although an embodiment of the present invention has been specifically described above, the present invention is not limited to the embodiment and the experimental examples. That is, it is a matter of course that the aspects described in relation to the embodiment and the experimental examples discussed so far may be changed, modified, or varied based on the technical concept of the present invention unless specifically stated otherwise.

### INDUSTRIAL APPLICABILITY

It is possible to provide a lead-acid battery with a high initial capacity while maintaining the battery life by using a positive electrode formed using a positive electrode active material paste including, as a raw material, lead powder in which the median size of the lead powder is adjusted in the range of 0.5 µm to 10 µm and the average particle diameter T10 of the lead metal contained in the lead powder is adjusted to 10 µm to 35 µm as in the present invention. In particular, it is possible to improve both the initial capacity and the battery life of the lead-acid battery by using a lead-acid battery positive electrode formed using a positive electrode active material paste including, as a raw material, lead powder containing lead metal having the average particle diameter T10 adjusted to 15 µm to 35 µm.

## Claims

1. A lead-acid battery positive electrode formed by filling a positive electrode active material paste into a grid substrate made of a lead alloy, the positive electrode active material paste being obtained by kneading a raw material including lead powder containing lead metal containing lead monoxide as a main component, wherein:
the lead powder has a median size of 0.5 µm to 10 um; and
the lead metal has an average particle diameter T10 of 10 µm to 35 µm when an average value of the particle diameters of top ten lead metal particles with the largest particle diameter is defined as the average particle diameter T10 of the lead metal as the lead metal is observed using a metallurgical microscope.

2. The lead-acid battery positive electrode according to claim 1, wherein
the average particle diameter T10 of the lead metal is 15 µm to 35 µm.

3. The lead-acid battery positive electrode according to claim 1, wherein
a specific surface area of the lead powder is 1.5 m²/g to 3.0 m²/g.

4. The lead-acid battery positive electrode according to claim 3, wherein
the specific surface area of the lead powder is 1.5 m²/g to 2.0 m²/g.

5. The lead-acid battery positive electrode according to claim 1, wherein:
the raw material further includes lead dioxide, lead sulfate, and water; and
a molar ratio of the lead dioxide and the lead sulfate is 1:2.

6. The lead-acid battery positive electrode according to claim 1, wherein:
the lead powder is powder obtained by crushing lead using a ball mill; and
the powder is obtained by crushing the lead in a drum of the ball mill while feeding air into the drum using a blower fan, and collecting the powder using an exhaust fan.

7. A lead-acid battery comprising the lead-acid battery positive electrode according to any one of claims 1 to 6.
